# EUROPÄISCHE PATENTSCHRIFT

(11) **EP 1 157 609 B1**
(45) Veröffentlichungstag und Bekanntmachung des Hinweises auf die Patenterteilung: **26.01.2005**
(21) Anmeldenummer: 01115844.1
(22) Anmeldetag: 17.07.1998
(51) Int. Cl.: A01K 13/00

(54) **Viehputzmaschine**
Cattle cleaning machine
Machine pour nettoyer le bétail

(30) Priorität: 08.08.1997 DE 19734289
(43) Veröffentlichungstag der Anmeldung: 28.11.2001
(62) Teilanmeldung aus: 98113413.3
(73) Patentinhaber: Mayer, Georg, 84529 Tittmoning (DE)
(72) Erfinder: Mayer, Georg, 84529 Tittmoning (DE)
(74) Vertreter: Bauer, Friedrich, Dipl.-Ing.

(56) Entgegenhaltungen:
- EP-A- 0 287 176
- DE-U- 7 904 082
- DE-U- 9 103 341
- US-A- 3 175 537

## Beschreibung

Die Erfindung betrifft eine Viehputzmaschine mit einer an einer Haltevorrichtung drehbar befestigten, mittels eines Motor antreibbaren Bürsteinrichtung gemäß dem Oberbegriff des Patentanspruches 1.

Aus der DE-U 7904082 ist eine Viehputzmaschine dieser Art mit einer schrägstehenden, zylinderförmigen Bürstenwalze bekannt. Durch die Schrägstellung soll dort erreicht werden, dass sich Kühe unterschiedlicher Größe bürsten können. Nachteilig ist hierbei jedoch, dass bei einer entsprechenden Abnutzung der Bürstenwalze die gesamte Bürstenwalze ausgetauscht werden muss, was entsprechend kostspielig ist. Weiterhin lassen sich bei dieser bekannten Bürstenwalze einzelne Bereiche nicht auf einfache Weise mit unterschiedlichen Borstenlängen und/oder Steifigkeiten ausbilden.

Der Erfindung liegt daher die Aufgabe zugrunde, eine Viehputzmaschine der eingangs genannten Art zu schaffen, welche einfach aufgebaut, kostengünstig zu fertigen und besonders zuverlässig in der Anwendung ist.

Diese Aufgabe wird erfindungsgemäß durch die Merkmale des Anspruches 1 gelöst. Vorteilhafte Ausführungsformen der Erfindung sind in den weiteren Ansprüchen beschrieben.

Bei der erfindungsgemäßen Viehputzmaschine besteht die Bürstenwalze aus einer Vielzahl von axial hintereinander angeordneten Bürstenscheiben mit unterschiedlichen Durchmessern, so dass die Bürstenwalze eine im Längsschnitt konkave Außenumfangsfläche aufweist.

Die konkave Form der Bürste ist hierbei zweckmäßigerweise so an die Rundung des Viehs angepasst, dass die Bürstenwalze mit einem Großteil ihrer gesamten Länge gleichzeitig an dem betreffenden Vieh anliegt. Die erfindungsgemäße Viehputzmaschine kann äußerst einfach aufgebaut sein und kostengünstig hergestellt werden. Auch ist der gezielte Austausch einzelner Bürstenscheiben möglich, falls nicht die gesamte Bürstenwalze, sondern nur einzelne Bürstenscheiben ausgetauscht werden sollen.

Vorteilhafterweise weist die Bürstenwalze Borsten auf, die im Bereich der Bürstenwalzenenden steifer sind als im mittleren Bereich der Bürstenwalze. Dies ist deswegen zweckmäßig, da die Borsten im Bereich der Bürstenenden länger als im mittleren Bereich der Bürstenwalze sind und bei gleicher Steifigkeit eher nachgeben würden. Durch die steiferen Borsten im Bereich der Bürstenenden kann dagegen ein im wesentlichen homogenes Steifigkeitsverhalten der Borsten in Längsrichtung der Bürstenwalze gewährleistet werden.

Die Erfindung wird nachfolgend anhand der Zeichnungen beispielhaft näher erläutert. In diesen zeigen:
- Figur 1 :: eine erste Ausführungsform der erfindungsgemäßen Viehputzmaschine, und
- Figur 2 :: eine zweite Ausführungsform der erfindungsgemäßen Viehputzmaschine.

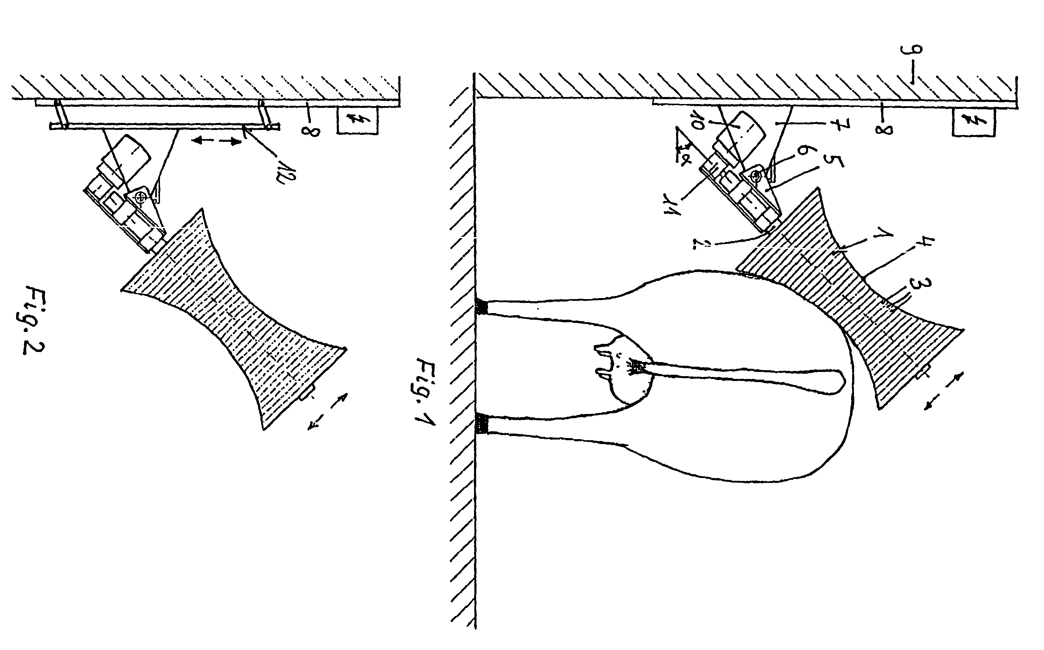

Die in Figur 1 gezeigte Viehputzmaschine besteht im wesentlichen aus einer Bürstenwalze 1, welche die Form eines Rotationshyperboloids hat und aus einer Vielzahl von hintereinander auf einer Bürstenwalzenachse 2 angeordneten Bürstenscheiben 3 besteht. Die Bürstenscheiben 3 haben somit im Bereich der Mitte der Bürstenwalze 1 einen geringeren Durchmesser als im Bereich der beiden Enden der Bürstenwalze 1. Im gezeigten Ausführungsbeispiel schließt die Bürstenwalzenachse 2 mit der Horizontalen einen Winkel α von etwa 45° ein. Die konkave Außenumfangsfläche 4 der Bürstenwalze 1 ist derart gewölbt, dass das zu bürstende Vieh sowohl auf einer Seite als auch bis zu einem bestimmten Maß am Rücken gebürstet wird.

Die Bürstenwalze 1 ist freitragend an ihrem unteren Ende in einer Bürstenachsenhalterung 5 drehbar gehaltert, welche über eine horizontale Schwenkachse 6 an einer Haltekonsole 7 schwenkbar gelagert ist. Die Haltekonsole 7 ist über eine vertikale Wandhalterung 8 an einer vertikalen Wand 9 befestigt.

Die Bürstenwalze 1 wird mittels eines Motors 10 in Umdrehung versetzt, der an der Bürstenachsenhalterung 5 befestigt ist und mit dem unteren Ende der Achse 2 über ein Winkelgetriebe 11 in Drehverbindung steht.

Der Motor 10 kann beispielsweise über einen Bewegungsmelder oder einen Kippschalter, welcher bei einer Schwenkbewegung der Bürstenwalze 1 um die Schwenkachse 6 herum einen Schaltvorgang auslöst, ein- bzw. abgeschaltet werden.

Die in Figur 2 gezeigte Ausführungsform unterscheidet sich von derjenigen der Figur 1 nur dadurch, dass die Haltekonsole 7 mittels eines Parallelogrammgestänges 12 höhenverstellbar an der Wandhalterung befestigt ist. Das Parallelogrammgestänge 12 kann mittels einer nicht dargestellten, beispielsweise von der Decke abgehängten Feder in einer bestimmten Höhenlage gehalten werden, wenn das Vieh die Viehputzmaschine verlässt. Weiterhin kann mittels nicht dargestellter Anschläge oder Federn sichergestellt werden, dass die Bürstenwalze 1 einen bestimmten Winkel α zur Horizontalebene beibehält, wenn kein Vieh die Bürstenwalze 1 hochdrückt.

## Patentansprüche

1. Viehputzmaschine mit einer an einer Haltevorrichtung drehbar befestigten, mittels eines Motors (10) antreibbaren Bürsteinrichtung, die eine einzige schrägstehende, rotationssymmetrische Bürstenwalze (1) umfasst, **dadurch gekennzeichnet, dass** die Bürstenwalze (1) aus einer Vielzahl von axial hintereinander angeordneten Bürstenscheiben (3) mit unterschiedlichen Durchmessern besteht, so dass die Bürstenwalze (1) eine im Längsschnitt konkave Außenumfangsfläche aufweist.

2. Viehputzmaschine nach Anspruch 1, **dadurch gekennzeichnet, dass** die Bürstenwalze (1) die Form eines Rotationshyperboloids hat.

3. Viehputzmaschine nach Anspruch 1 oder 2, **dadurch gekennzeichnet, dass** die Bürstenwalze (1) Borsten aufweist, die im Bereich der Bürstenwalzenenden steifer sind als im mittleren Bereich der Bürstenwalze (1).

4. Viehputzmaschine nach einem der vorhergehenden Ansprüche, **dadurch gekennzeichnet, dass** die Haltevorrichtung eine an einer Wand (9) befestigbare Haltekonsole (7) aufweist, an der die Bürstenwalze (1) um eine horizontale Schwenkachse (6) schwenkbar gehaltert ist.

5. Viehputzmaschine nach Anspruch 4, **dadurch gekennzeichnet, dass** die Haltekonsole (7) höhenverstellbar an der Wand (9) befestigt ist.

6. Viehputzmaschine nach Anspruch 5, **dadurch gekennzeichnet, dass** die Haltekonsole (7) über ein Parallelogrammgestänge (12) vertikal verschiebbar an der Wand (8) befestigt ist.

7. Viehputzmaschine nach einem der Ansprüche 4 bis 6, **dadurch gekennzeichnet, dass** der Motor (10) an einer Bürstenachsenhalterung (5) befestigt ist, die an der Haltekonsole (7) schwenkbar befestigt ist.

8. Viehputzmaschine nach einem der Ansprüche 1 bis 6, **dadurch gekennzeichnet, dass** der Motor (10) stationär befestigt und über eine biegsame Welle oder ein Getriebe mit der Bürstenwalze (1) verbunden ist.

## Claims

1. Cattle-cleaning machine with a brushing arrangement which is fastened rotatably on a holding device, can be driven by means of a motor (10) and comprises a single inclined rotationally symmetrical brush roller (1), **characterized in that** the brush roller (1) consists of a plurality of brush discs (3) arranged axially one behind the other, said brush discs having different diameters so that the brush roller (1) has an external circumferential surface which is concave in longitudinal section.

2. Cattle-cleaning machine according to claim 1,
**characterized in that** the brush roller (1) has the shape of a hyperboloid of revolution.

3. Cattle-cleaning machine according to Claim 1 or 2, **characterized in that** the brush roller (1) has bristles which are stiffer in the region of the brush roller ends than in the central region of the brush roller (1).

4. Cattle-cleaning machine according to one of the preceding claims, **characterized in that** the holding device has a holding bracket (7) which can be fastened on a wall (9) and on which the brush roller (1) is mounted pivotably about a horizontal pivoting axis (6).

5. Cattle-cleaning machine according to Claim 4, **characterized in that** the holding bracket (7) is fastened height-adjustably on the wall (9).

6. Cattle-cleaning machine according to Claim 5, **characterized in that** the holding bracket (7) is fastened vertically displaceably on the wall (9) via a parallelogram linkage (12).

7. Cattle-cleaning machine according to one of Claims 4 to 6, **characterized in that** the motor (10) is fastened on a brush shaft mounting (5) which is fastened pivotably on the holding bracket (7).

8. Cattle-cleaning machine according to one of Claims 1 to 6, **characterized in that** the motor (10) is fastened in a stationary manner and is connected to the brush roller (1) via a flexible shaft or a gear.

## Revendications

1. Machine à nettoyer le bétail, comprenant un agencement à brosse fixé en rotation sur un dispositif support et susceptible d'être entraîné au moyen d'un moteur (10), ledit agencement à brosse comprenant un unique cylindre à brosse (1) disposé en oblique et à symétrie de révolution,
**caractérisée en ce que** le cylindre à brosse (1) est constitué d'une pluralité de disques à brosse (3) agencés axialement les uns derrière les autres et ayant des diamètres différents, de sorte que le cylindre à brosse présente une surface extérieure concave en section longitudinale.

2. Machine à nettoyer le bétail selon la revendication 1,
**caractérisée en ce que** le cylindre à brosse (1) a la forme d'un hyperboloïde de révolution.

3. Machine à nettoyer le bétail selon l'une ou l'autre des revendications 1 et 2,
**caractérisée en ce que** le cylindre à brosse (1) comporte des poils qui sont plus raides dans la région des extrémités du cylindre à brosse que dans la région médiane du cylindre à brosse (1).

4. Machine à nettoyer le bétail selon l'une des revendications précédentes,
**caractérisée en ce que** le dispositif support comprend une console support (7) susceptible d'être fixée sur un mur (9) et sur laquelle le cylindre à brosse (1) est maintenu avec faculté de basculement autour d'un axe de basculement horizontal (6).

5. Machine à nettoyer le bétail selon la revendication 4,
**caractérisée en ce que** la console support (7) est fixée avec faculté de réglage en hauteur sur le mur (9).

6. Machine à nettoyer le bétail selon la revendication 5,
**caractérisée en ce que** la console support (7) est fixée avec faculté de translation verticale sur le mur (8) au moyen d'une tringlerie à parallélogramme (12).

7. Machine à nettoyer le bétail selon l'une des revendications 4 à 6,
**caractérisée en ce que** le moteur (10) est fixé sur une monture (5) pour l'axe de brosse, ladite monture étant fixée avec faculté de basculement sur la console support (7).

8. Machine nettoyer le bétail selon l'une des revendications 1 à 6,
**caractérisée en ce que** le moteur (10) est fixé de manière stationnaire, et raccordé au cylindre à brosse (1) par l'intermédiaire d'un arbre flexible ou d'une transmission.
